# EUROPEAN PATENT APPLICATION

(11) **EP 4 838 394 A1**
(43) Date of publication of application: **11.11.2026**
(21) Application number: 26176201.7
(22) Date of filing: 04.05.2026
(51) Int. Cl.: G06F 21/57, B65G 13/02, B65G 43/08

(54) **METHOD OF OPERATING A ZONE CONTROLLER**

(30) Priority: 05.05.2025 EP 25174169
(71) Applicant: Interroll Holding AG, 6592 Sant'Antonino (CH)
(72) Inventor: Lamm, Dr. Lukas, 41836 Hückelhoven (DE); Schnabel, Volker, 41836 Hückelhoven (DE)
(74) Representative: Kohlhof, Stephan

(57) **Abstract**

Method of setting a zone controller (12), adapted to control the operation of a conveyor zone (2) within a conveyor arrangement (1), into operation;
the zone controller (12) is adapted
- to control the operation of a conveyor zone (2) within a conveyor arrangement (1);
- to communicate with other zone controller (12) in the same conveyor arrangement;

the method comprises to the following steps:
- starting the zone controller (12);
- loading at least one boot code (BC1, BC2) and executing the boot code (BC1, BC2);
- loading a firmware (FW) and executing the firmware (FW);
- before loading the firmware for execution, checking the firmware (FM) for authentication (AC) by a safety functionality (SF).

## Description

The invention refers to a method of operating a zone controller.

Conveyor arrangements of the generic type are disclosed in PCT/EP2024/066782, WO 2024/149872 A1, WO 2023/117521 A1, and WO 2023/247237 A1.

DE 102020 110 795 A1 discloses a connection unit for a linear transport system, which is arranged on a moving unit of the transport system. The connection unit is adapted to receive energy and data wirelessly from stationary units and to provide energy and communication interfaces for application electronics and a connected tool. A modular structure comprises a housing, an energy receiving unit, a communication unit and interfaces to application electronics, including the possibility to load and update firmware.

EP 4 455 817 A2 discloses a control system for a conveyor arrangement, in which operational data of conveyor components are processed to control conveying operations. The control system monitors and controls conveyor elements and processes operational data for managing conveying processes within a conveyor system.

GB 2 396 452 A discloses a conveyor control system for operating multiple conveyor sections in a conveying installation. The Control system controlls the movement of objects through conveyor sections and coordinates conveyor operation within a conveyor arrangement.

US 2021/0084953 A1 discloses systems and methods for controlling conveyor or material handling equipment. The method coordinates the operation of conveyor components based on detected states or system conditions to manage the transport of conveyed objects within a conveyor system.

It is the object of the present invention to improve the reliability of operation within a conveyor arrangement of the generic type.

The invention comprises a method, according to the main claim; embodiments are subject of the subclaims and the description.

The invention relates in particular to a zone controller which is not operated as an isolated control unit, but as part of a conveyor arrangement comprising a plurality of zone controllers of the same kind. Each zone controller may be adapted to control the operation of one or a plurality of conveyor zones within the conveyor arrangement. During operation, the zone controllers may cooperate with each other by exchanging interzone messages containing operational data relevant for controlling the conveyor arrangement.

The inventive involves starting the zone controller, loading at least one boot code and executing the boot code, and loading a firmware and executing the firmware. Before loading the firmware for execution, the method includes checking the firmware for authentication by a safety functionality. This ensures that only authenticated firmware is executed, enhancing the security and reliability of the conveyor arrangement.

In such a distributed control architecture, the correct operation of an individual zone controller may depend on operational data received from other zone controllers. As a consequence, a malfunction, erroneous behavior or manipulation of the firmware of a single zone controller may adversely affect the operation of further conveyor zones or of the conveyor arrangement as a whole. The inventive authentication of the firmware prior to execution therefore increases the operational reliability and safety not only of an individual zone controller but of the entire conveyor arrangement.

In an embodiment, the at least one boot code comprises a first boot code stored in a non-editable, non-volatile memory. This provides the advantage of ensuring that the initial boot code cannot be altered, maintaining the integrity and security of the boot process.

In an embodiment, the at least one boot code comprises a second boot code stored in an editable, non-volatile memory. This allows for updates and modifications to the boot code, providing flexibility in maintaining and improving the boot process.

In an embodiment, the authentication check is performed by comparing authentication details attached to the firmware with authentication information stored in the second memory. This method ensures that the firmware is verified against known authentication information, preventing unauthorized or malicious firmware from being executed.

In an embodiment, the authentication check confirms the integrity of the firmware before allowing its execution. This step ensures that only firmware with verified integrity is executed, enhancing the security and reliability of the zone controller's operation.

In an embodiment, the firmware is stored in a non-volatile, editable memory. This allows the firmware to be updated and modified while ensuring it remains persistent across power cycles, providing both flexibility and reliability.

In an embodiment, the first boot code initializes hardware components including the CPU, memories, and communication sections. This initialization ensures that all essential hardware components are properly configured and ready for operation, contributing to the overall stability and functionality of the zone controller.

In an embodiment, the security functionality is loaded for execution by the at least one boot code or is executed as part of the at least one boot code, in particular the second boot code. This integration of security functionality within the boot process ensures that security checks are performed early in the boot sequence, enhancing the protection against unauthorized access and ensuring the integrity of the system.

The terms "editable" and "non-editable" refers to the writability in the installed state of the memory and via the interfaces provided by the zone controller. It is assumed that even ROMs can of course be written in some way with the non-editable content, which is not covered by the term editable here. ROMs are therefore regarded as non-editable in the sense of the present description.

The zone controller comprises a plurality of memories with clearly separated purposes and properties. In particular, one or more of the following memories are comprised. The terms "first", "second" and "third" used for the memories serve solely for individual identification and distinction and do not imply any limitation with respect to the number of memories provided.:
A first memory is provided as a non-volatile, non-editable memory, in particular a ROM. Due to the non-editable nature of the first memory, the integrity of the first boot code is ensured. The first memory in particular stores a first boot code, which is executed immediately after start-up of the zone controller. The first boot code in particular initializes essential hardware components, including the CPU, further memories and communication sections.

A second memory is provided as a non-volatile, editable memory, in particular a flash memory or EEPROM.

The second memory in particular stores a second boot code, which is loaded and executed by the first boot code. The second boot code in particular performs extended system checks, initializes further hardware components and manages security-related functions. The second memory in particular further stores a security functionality, which is executed by or as part of the second boot code. In addition, the second memory in particular stores the firmware of the zone controller, as well as authentication information used for verification of the firmware. The editable nature of the second memory allows updating of the second boot code, the security functionality and the firmware, while maintaining control over their execution.

A third memory is provided as a volatile, editable memory, in particular a RAM. The third memory is used for temporary data storage during execution of the firmware and during normal operation of the zone controller.

In the context of the present description, the term "non-editable" refers to a memory that cannot be modified during normal operation or a maintenance operation mode of the zone controller via the communication interfaces or software-based update mechanisms provided by the zone controller. Such a non-editable memory may be programmable only by a dedicated hardware-level programming process, in particular by physical access, factory programming or one-time programming, which is not accessible via the communication sections of the zone controller.

Interzone messages exchanged between the zone controllers may comprise operational data of the conveyor zones, in particular status information, timing information, speed information or occupancy information. Such operational data may originate in particular from conveyor rollers and presence sensors associated with a conveyor zone. By exchanging such operational data, the zone controllers are enabled to coordinate the operation of adjacent or cooperating conveyor zones in a distributed manner.

Since the interzone messages influence the operation of multiple conveyor zones, the authenticity and integrity of the firmware executed by each zone controller are of particular importance. According to the invention, the firmware is therefore authenticated before being loaded for execution, such that only authenticated firmware is executed on the zone controller. This prevents compromised or manipulated firmware from participating in the exchange of interzone messages and from influencing the operation of other zone controllers.

Since the interzone messages may influence the operation of multiple conveyor zones, the authenticity and integrity of the firmware executed by each zone controller are of particular importance. The firmware may therefore be authenticated before being loaded for execution, such that only authenticated firmware is executed on the zone controller. This prevents compromised or manipulated firmware from participating in the exchange of interzone messages and from influencing the operation of other zone controllers.

The authentication check may based on authentication information stored in a non-volatile memory of the zone controller. The authentication information may be stored in a first or a second non-volatile memory and is preferably stored in a non-editable first memory. By storing the authentication information in a non-editable memory, it is ensured that the authentication information cannot be modified during normal operation of the zone controller via software-based update mechanisms or communication interfaces.

The invention provides a robust method for securely operating zone controllers in a distributed conveyor arrangement. By authenticating firmware prior to execution and by ensuring that only authenticated zone controllers participate in the exchange of interzone messages, the invention may increase operational reliability, system integrity and resistance against manipulation within conveyor systems comprising multiple interacting zone controllers.

An example embodiment of the invention is described in more detail with the help of the figures; herein show
- fig. 1: a conveyor zone in perspective view having a first embodiment light barrier;
- fig. 2: a basic conveyor arrangement;
- fig. 3: a schematic representation of the controls structure within an inventive conveyor arrangement in a first situation;
- fig. 4: a schematic representation of the controls structure within the inventive conveyor arrangement in a second situation;
- fig. 5: a schematic representation of a zone controller of the control structure within the inventive conveyor arrangement;
- fig. 6: schematically the sequence of steps of the inventive method.

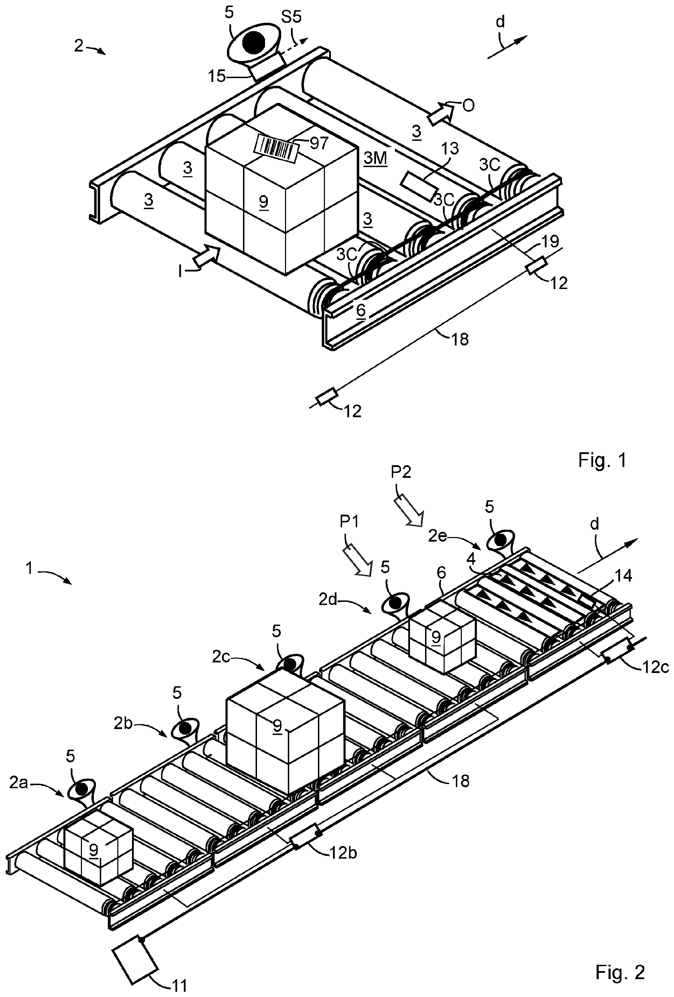

Figure 1 shows an exemplary conveyor zone 2, comprising several conveyor rollers 3 which are driven together. For this purpose, one of the conveyor rollers 3 is designed as a motor-driven conveyor roller 3M, in particular a motorized roller 3M. The motor-driven conveyor roller 3M is driven in particular by a three-phase motor arranged in the motorized conveyor roller 3M. Via one or more drive connectors 3C, e.g. a drive belt, the conveyor rollers 3 of a conveyor zone 2 are drive-connected to each other and are jointly driven by the motor-driven conveyor roller 3M. An object 9 is linearly conveyed from an inlet I to an outlet O along a conveying direction d.

By means of a presence sensor 5, the presence of a conveyed object 9 arranged within the conveyor zone 2 can be determined. The presence sensor 5 thereby generates a sensor signal S5, which is connected via a signal line (not shown) to a local zone controller 12 presented further below. In the present embodiment the presence sensor 5 is a light barrier. Other detection technologies are applicable as well.

The conveyor rollers 3 and the presence sensor 5 are attached to a common support frame 6. The conveyor rollers 3 of several conveyor zones 2 can be attached to a common support frame 6.

The motor-driven conveyor rollers 3M are each controlled by at least one or a plurality of local zone controllers 12. A single zone controller 12 can control the motor-driven conveyor rollers 3M of several conveyor zones 2. A plurality of local zone controllers 12 are arranged in a conveyor arrangement 1 (figure 2), which communicate with each other via a data connection 18.

Figure 2 shows a basic conveyor arrangement 1, where conveyor zones 2a...e as described previously are used. A plurality of zone controllers 12 control the operation of the conveyor zones 2. A central controller 11 (e.g. programmable logic control) may be provided to control the overall operation of the conveyor arrangement 1.

Scanners (not shown), such as QR code scanners or barcode scanners, may be arranged along at least some of the conveyor zones 2 and provide identification data relating to objects 9 passing the scanner in the conveyor zones 2.The central controller 11 has access to an object database (not shown), which provides destination data based on the identification of the objects 9. Based on the acquired data the central controller 11 provides operation instructions to a local zone controller 12, on how to handle the object 9, i.e. to which of a plurality of outlets O said object 9 is to be conveyed. To change the direction of an object a zone can be equipped with a transfer device 4 comprising a transfer controller 14. Such a transfer device is shown in EP 3 222 564 B1 (in this document and figure the transfer device is marked with the reference sign "20")

For the proper operation it is not required that each conveyor zone is equipped with an own scanner for identifying the object located in each conveyor zone. As a consequence, some conveyor zones, usually one of the most upstream zones, are provided merely with a scanner. In contrast thereto, in an embodiment all or nearly all of the conveyor zones 2 may be equipped with a presence sensor

In an alternative embodiment, as described in European patent application 22 180 381.0, the central controller 11 is an object data broker, to which the local zone controllers 12 are also connected. The data broker provides destination data related to the identified objects 9 and the zone controllers 12 are adapted to control operation of the zones based on the provided destination data. For the purpose of the present invention the provision of a PLC is not required.

In particular the local zone controllers 12 control the motor-driven conveyor rollers 3M in such a way that the successively approaching conveyed objects 9 do not collide with each other. The control takes place in such a way that essentially only one conveyed object 9 is present per conveyor zone 2. However, slight overlaps may occur. For example, an upstream conveyed object 9b located on an upstream conveyor zone 2c may already enter a downstream conveyor zone 2d even though the downstream conveyed object 9a has not yet left this downstream conveyor zone 2d completely.

Alternatively, the position of the objects within the zones are accurately tracked by considering the conveying speed, so that also more than one object can be located with in one zone. In this case, the gaps between two objects are controlled, to avoid that the objects do not collied with each other (see non published European patent application EP24208395.4).

In the example of figure 2, the presence sensor 5 located within zone 2d (see arrow P1) provides timing information, which is relevant for determining a time, when an object will arrive at the transfer device 4 the downstream conveyor zone 2e (see arrow P2).

The presence sensor 5 has a sensor controller 15, which is in data contact with one the zone controllers 12. The motorized roller 3M has a motor controller 13, which is in data contact with one the zone controllers 12. The transfer device 4 has a transfer controller 14, which is in data contact with one of the other zone controllers 12.

The conveyor zones 2 each are controlled by a local zone controller 12 as shown in figure 1 or 2, in particular wherein one local zone controller 12 may be adapted to control the operation of more than one conveyor zone 2.

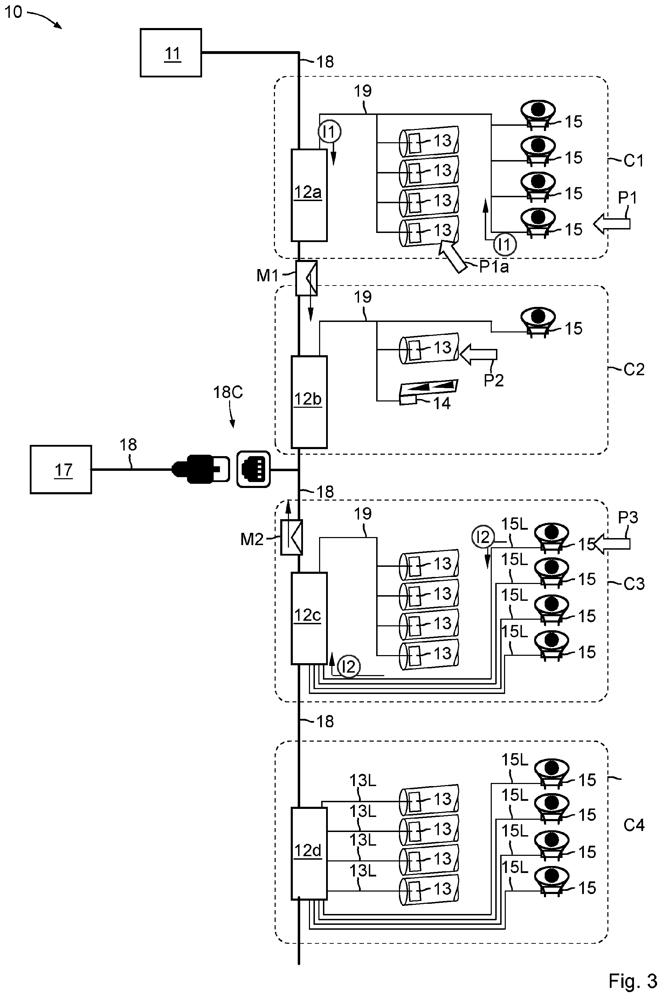

Figure 3 shows a control network 10 which is used to control a conveyor arrangement in main similar to the arrangement as shown in figure 2. Reference is made to the description above.

The plurality of zone controllers 12 are connected to each other and to the central controller 11 by means of a first data bus 18.

The different zone controllers 12 are connected to individual device controller 13, 14, 15, such as
- a roller controller 13 of a roller 3,
- a transfer controller 14 of a transfer device 4,
- a sensor controller 15 of a presence sensor 5 or any other kind of sensor, such as a identification scanner (not shown),
- any other actuating device.

The zone controller 12 may be connected to each of the device controller 13, 14, 15 by means of a second data bus 19, as shown in figure 3 for the first and second zone controller 12a. 12b.

Via the second data bus 18, also a detachable maintenance computer 17 for maintenance of the zone controller 12 may be connected from time to time to the zone controller 12 via a connector 18C in the first data bus 18.

Alternatively the zone controller 12 connected to the device by a direct digital or analogous direct connection. As an example the zone controller 12c and 12d each are connected to the presences sensor controllers 15 by means of a direct sensor data line 15L. As another example the zone controller 12d is connected to the motor controllers 13 by means of a direct motor control line 13L.

Each zone controller 12a..d forms with the device controllers 13, 14, 15 a zone control group C1..C4. In particular the zone controller 12 of the zone control group form the connection between device controllers 13, 14, 15 of said zone control group and the first data bus 18.

So each zone control group C1..C4 necessarily comprises exactly one zone controller 12 and at least one, in particular a plurality of, device controller 13, 14, 15 connected to the zone controller 12. The device controller 13, 14, 15 of a certain zone control group are not connected to a zone controller 12 of another zone control group than the certain zone control group.

As described previously with reference to figure 2 there may be a first situation, where the second zone controller 12b of the second zone control group C2 is controlling the operation of the transfer device 4. The transfer controller 14 of said transfer device 4 is part of the second zone control group C2. Thereby the second zone controller 12b sends out a command to the transfer controller 14 within the same second zone control group C2. For controlling the operation of the respective transfer device 4, the second zone controller 12 requires an information from the upstream zones, in particular a timing information. In this particular example, the required information comprises a timing information, from which the second zone controller can determine the time, when the object will enter the zones controlled by the second zone control group C2 from the zone controlled by the first zone control group C2.

This timing information is based on a first device information I1 provided an upstream sensor controller 15 marked with arrow P1 in figure 2. This first device information may comprise a time when an object has passed the respective presence sensor. The sensor controller 15, which is providing this first device information 11. This sensor controller 15 is part of the other first zone control group C1.

Since there is no direct data connection between the second zone controller 12b of the second zone control group C1 and the and the sensor controller 15 of the first zone control group C1, the zone 12 controller of different zone control groups C1..C4 are adapted to exchange interzone messages M between each other to provide data between each other.

It is to be noted, that the first information may be nothing more than a sensor ON / sensor OFF signal. This signal usually does not provide a reliable information, when an object will enter a certain zone. The zone controller may also include a further information about a travel speed, which originates from a motor controller 13 (see arrow P1a) in figure 3.

In the present example the first zone controller 12a of the first zone control group C1 sends a first interzone message M1 to the second zone controller 12b of the second zone control group C2 containing the timing information, which is based on the first device information I1. Based on the first interzone message M1 the second zone controller 12b can determine the point in time, when an object is entering the conveyor zones controlled by the second zone control group C2 and in particular the area of the transfer device 4, which is controlled by said transfer controller 14 within the second zone control group C2.

In a second situation a second object is to be conveyed from a conveyor zones of the second zone control group C2 (arrow P2 points to the motor controller 15 controlling the motor of this zone) into a downstream conveyor zone. Arrow P3 points to the motor controller 15 controlling the motor of this zone downstream zone within the third zone control group).

In this second situation, a third object (blocking object) is blocking the most upstream conveyor zone controlled by the third zone control group C3. In said second situation a sensor controller 15 (see arrow P3 in figure 3) of this most upstream conveyor zone within the third zone control group C3 issues a permanent "occupied" signal as a second information I2.

The third zone controller 12c of the third zone control group C2 sends a second message M2 to the second zone controller 12b of the second zone control group C2, containing an, that the most upstream zone within the third zone control group is not in a condition to receive any further objects from the zone upstream of said zone. As a consequence, the second zone controller 12b instructs the motor controller 15 marked with arrow P2 to stop the connected drive motor. As a consequence the second object is prevented to be conveyed by into the next conveyor zone.

The above two situations depict, that zone controllers 12 within a certain zone control group (e.g. zone control group C2) requires data from a separate zone control group (e.g. zone control group C1 or C3), which is based on an information I1, I2, issued by a device controller 13, 14, 15 of said separate zone control group (e.g. zone control group C1 or C3).

The message M1, M2 exchanged from a sending zone controller 12a, 12c to a receiving zone controller 12b, where the sending zone controller 12a, 12c and the receiving zone controller 12b belongs to separate zone control groups, via the first bus connection 18 are called interzone messages M1, M2.

In general and according to the present disclosure, an interzone messages M1, M2 comprise information which is based on information provided by a device controller 13, 14, 15, which belongs to the same zone control group C1 as the sending zone controller 12b.

As described above the interzone messages based on information issued by device controller, is crucial for the proper operation of the conveyor arrangement.

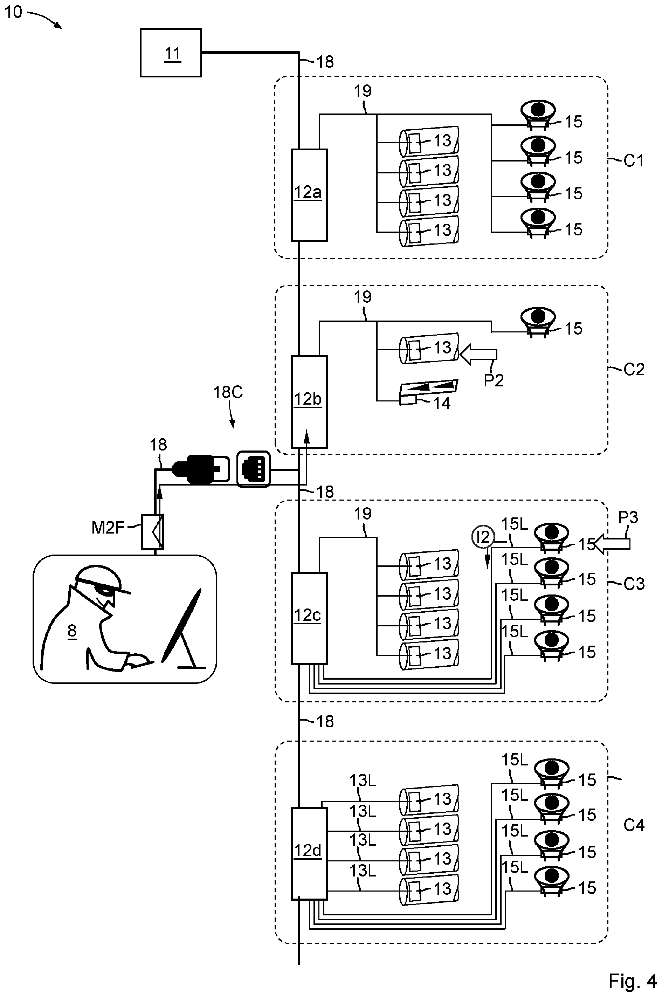

Figure 4 shows a situation where a malicious attacker 8 is trying disturb the proper operation of the conveying arrangement. Here the malicious attacker continuously sends out fake messages M2F over the first bus connection 18, which comprise in main the same content as the second interzone message M2, as described in the situation of figure 3.

Now the second zone controller 12b gets permanently a notification by said second fake message M2F, which message falsely states that the first conveyor zone within the third zone control group C3 is not in a condition to receive a further object. By continuously sending this second fake message F2M, the malicious attacker 8 can shut down the proper operation of conveyor arrangement since no object can pass the transition between the most downstream zone of the second zone control group C3 and the first zone of the third zone control group C3.

It is apparent, that there are numerous other possibilities how faked interzone messages can significantly disturb the proper operation. As another example, just small deviations in the timing information can lead to the result, that the transfer 4 is not working properly and objects are conveyed on wrong paths leading to incorrect destinations. Also there is a security risk, in case that the firmware of a conveyor controller is not working properly.

The invention proposes a possibility to reduce the risk of malicious attacks within the conveyor arrangement of figure 2.

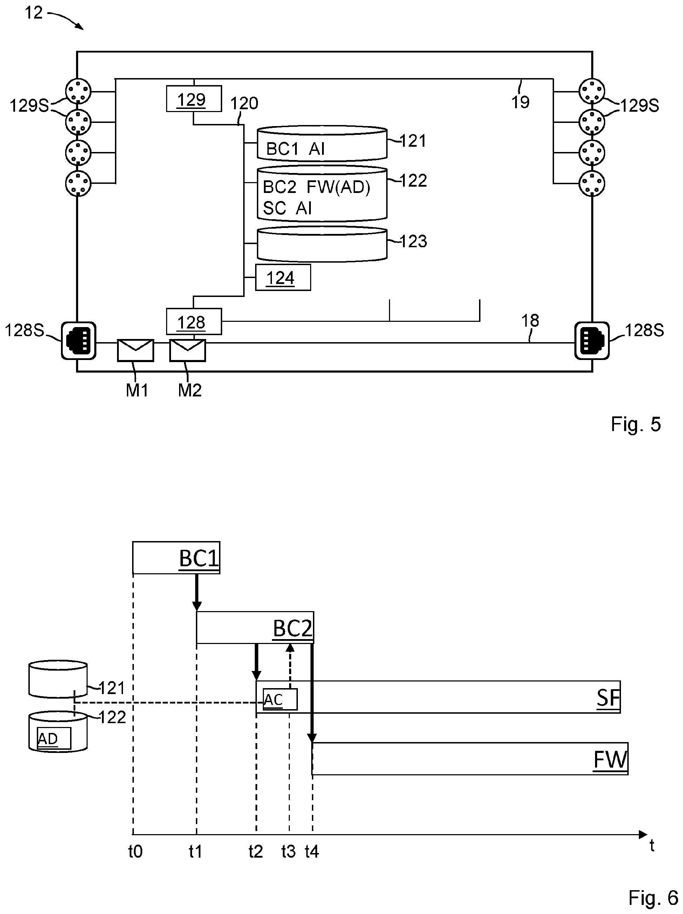

Figure 5 shows a zone controller 12 of the conveyor arrangement 10 of figures 3 and 4 in more detail. The zone controller 12 has central processing unit (CPU) 124 and different memories. A first memory 121 is a non-editable, non-volatile memory (e.g. ROM). A second memory is a non-volatile, editable memory 122 (e.g. a flash memory or EEPROM). A third memory is a volatile memory 123 (e.g. RAM). A first communication section 128 is communication interface to the first data bus 18, where a bus connecting cable can be plugged into first communication socket 128S. A second communication section 129 is a communication interface 129 to all the device controllers of the same zone control group attached to the zone controller, where connecting cables can be plugged into second communication socket 129S to connects said device controllers.

An internal bus 120 connects the CPU 124, the memories 121, 122, 123 and the communication sections 128, 129 with each other.

The interzone message M1, M2 are communicated via the first data bus 18 and are received by the first communication section 128.

Focus is now set on the process described with the help of figures 5 and 6, when a the zone controller 12 is switched on or is restarted at time t0. Within a boot section of the first memory 121 a first boot code BC1 is stored, which is executed initially at time t0. Since this first boot code BC1 is stored in a non-volatile and non-editable memory that cannot be modified, its integrity is ensured. Executing the first boot Code BC1 initializes the hardware components, such as the CPU, other memories and communication sections. Once this initialization is complete, the execution of the first boot code BC1 loads the a second boot code BC2 for execution at time t1.

The second boot code BC2 is stored in the second memory 122, since it may be updated or replaced with newer versions from time to time. Executing the second boot code BC2 performs basic system checks and initializing essential hardware components. This ensures that the conveyor controller 12 is in a stable state and ready for further operations. Executing the second boot code BC2 may involve tasks like memory testing and parametrization of peripheral devices, like the communication sections. The second boot code BC2 is also responsible for more advanced security checks and configurations.

Once these verifications and configurations are complete, the second boot code BC2 loads a security functionality SF for execution at time t3.

The security functionality SF may may be a separate executable code stored in the second memory or may be a part of the second boot code BC2 and therefore a sub-functionality within the execution of the second boot code BC2. The security functionality SF performs several security checks.

At a time t4, the second boot code BC2 loads a firmware FW for execution. The firmware FM is stored in the second memory 122.

The firmware FW includes the operating system and application code that runs on the controller. The firmware FW controls the main functionality of the device, including user interface, control algorithms, and communication protocols. During the initialization and during normal operation, the firmware FW uses configuration data to set up the system according to predefined parameters. This configuration data includes additional information such as conveying parameters more specifying the operational characteristic of the individual conveying process, which is to be controlled by an individual controller 12.

The firmware is a crucial part if the functionality of the controller 12. Before loading the firmware FW for execution, the security functionality SF performs an authentication check AC, where authentication of the firmware. Attached to the firmware, stored within the second memory 122 is a authentication detail AD. This authentication details AD is compared by the authentication functionality AF with an authentication information AI stored within non-volatile first or second memories 121, 122, preferably in the first memory 121, where it can not be manipulated.

If the comparison leads to a positive result, the positive result of the authentication is confirmed to the second boot code BC2 at time t3 and the firmware FW is loaded by the executed second boot code BC2 for execution subsequently at time t4. If the comparison leads to a negative result, the no confirmation of authentication is provided by the authentication functionality and thus execution of the firmware FW is not started.

### List of reference signs

- 1: conveyor arrangement
- 2: conveyor zone, in particular roller conveyor zones
- 3: conveyor roller
- 3M: motor-driven conveyor roller
- 3C: drive connector
- 4: transfer device
- 5: presence sensor
- 6: support frame
- 7: identification scanner (e.g. barcode reader)
- 8: malicious attacker
- 9: object to be conveyed
- 10: control arrangement
- 11: central controller
- 12: zone controller
- 13: motor controller
- 13L: motor control line
- 14: transfer controller
- 15: sensor controller
- 15L: sensor data line
- 17: maintenance computer, detachable
- 18: first data bus
- 18C: connector in first data bus line
- 19: second data bus
- C1..C4: zone control group
- M1,2: interzone message
- Ms: sender identification in interzone message
- Mr: recipient identification in interzone message
- Md: verification details in interzone message
- Mi: verification information in verification database
- Mp: detail generation policy in policy database
- Mb: message body in interzone message
- **11,2**: device information

- 120: internal bus
- 121: first memory, non-editable, non-volatile, e.g. ROM
- 122: second memory, editable, non-volatile memory, e.g. flash memory, EEPROM
- 123: third memory, editable, volatile, e.g. RAM
- 124: central processing unit
- 128: first communication section
- 128S: first communication socket
- 129: second communication section
- 129S: second communication socket
- d: conveying direction
- S5: sensor signal (of presence sensor)

- BC1: first code (Boot ROM) initializes
- BC2: second boot code starts Security functionality and starts FM
- SFC: security functionality code
- FW: firmware
- AC: authentication check
- AD: authentication details

## Claims

1. Method of setting a zone controller (12), adapted to control the operation of a conveyor zone (2) within a conveyor arrangement (1), into operation;
the zone controller (12) is adapted
- to control the operation of a conveyor zone (2) within a conveyor arrangement (1);
- to communicate with other zone controllers (12) in the same conveyor arrangement;
the method comprises to the following steps:
- starting the zone controller (12);
- loading at least one boot code (BC1, BC2) and executing the boot code (BC1, BC2);
- loading a firmware (FW) and executing the firmware (FW);
**characterized by** the following step:
- before loading the firmware for execution, checking the firmware (FM) for authentication (AC) by a safety functionality (SF).

2. The method of claim 1,
**characterized in**
**that** the at least one boot code (BC1, BC2) comprises a first boot code (BC1) stored in a non-editable, non-volatile first memory (121) of the zone controller (12).

3. The method according to any of the preceding claims ,
**characterized in**
**that** the at least one boot code (BC1, BC2) comprises a second boot code (BC2) stored in an editable, non-volatile second memory (122) of the zone controller (12).

4. The method according to any of the preceding claims ,
**characterized in**
**that** the authentication check (AC) is performed by comparing authentication details (AD) attached to the firmware (FW) with an authentication information (AI) stored in a non-volatile memory (122) of the zone controller (12).

5. The method according to any of the preceding claims,
**characterized in**
**that** the authentication check (AC) is based on authentication information (AI) stored in a non-volatile first or second memory (121, 122) of the zone controller (12).

6. The method according to the preceding claim,
**characterized in**
**that** the authentication information (AI) is stored in the first memory (121), which is non-editable.

7. The method according to any of the preceding claims,
**characterized in**
**that** the authentication check (AC) confirms the integrity of the firmware (FW) before allowing its execution.

8. The method according to any of the preceding claims,
**characterized in**
**that** the firmware (FW) is stored in a non-volatile, editable memory (122).

9. The method according to any of the preceding claims,
**characterized in,**
**that** the security functionality (SF) is
loaded for execution by the at least one boot code (BC1, BC2) or
is executed as part of the at least one boot code (BC1, BC2), in in particular the second boot code (BC2).

10. The method according to any of the preceding claims,
**characterized in**
**that** during operation, the zone controller (12) is adapted to communicate with other zone controllers (12) of the same kind within the conveyor arrangement (1) by exchanging interzone messages (M).

11. The method according to any of the preceding claims,
**characterized in**
**that** the zone controller (12) is adapted to control the operation of one or a plurality of roller conveyor zones (11) within the conveyor arrangement (1),
the conveyor arrangement (1) being controlled by a plurality of zone controllers (12) of the same kind,
wherein operational data of the roller conveyor zones are transmitted between the zone controllers by means of interzone messages (M).

12. The method according to claim 10 or 11,
**characterized in**
**that** the operational data contained within the interzone messages (M) comprise operational data of conveyor rollers and presence sensors of a conveyor zone.
